# EUROPÄISCHE PATENTSCHRIFT

(11) **EP 1 502 845 B1**
(45) Veröffentlichungstag und Bekanntmachung des Hinweises auf die Patenterteilung: **12.09.2007**
(21) Anmeldenummer: 04016281.0
(22) Anmeldetag: 10.07.2004
(51) Int. Cl.: B62K 9/00

(54) **Kindertretfahrzeug**
Childs ride-on vehicle
Véhicule d'enfant

(30) Priorität: 30.07.2003 DE 10334749
(43) Veröffentlichungstag der Anmeldung: 02.02.2005
(73) Patentinhaber: Firma Franz Schneider GmbH & Co. KG, D-96465 Neustadt b. Coburg (DE)
(72) Erfinder: Ewringmann, Ulrich, 82024 Taufkirchen (DE)
(74) Vertreter: Flosdorff, Jürgen

(56) Entgegenhaltungen:
- EP-A- 0 783 906
- DE-U- 1 975 663
- DE-U1- 8 901 489
- US-A- 2 455 692
- US-A- 2 776 767
- US-A- 2 816 772

## Beschreibung

Die Erfindung betrifft ein Kindertretfahrzeug gemäß dem Oberbegriff des Patentanspruchs 1.

Derartige Spielfahrzeuge haben für Kinder einen zusätzlichen Spielwert, wenn sie mit Zubehör ausgerüstet sind, mit dem über das eigentliche Fahren mit dem Tretfahrzeug hinaus zusätzliche Aufgaben oder "Arbeiten" auf spielerische Weise ausgeführt werden können. Ein Beispiel hierfür ist ein Kindertretfahrzeug mit einer an zwei Armen gehaltenen Ladeschaufel, die in einer abgesenkten Position beispielsweise mit Sand beladen werden kann, um anschließend nach oben verschwenkt und in der angehobenen Position verriegelt zu werden, so daß das Tretfahrzeug nun mit der Ladung zu seinem Bestimmungsort gefahren werden kann, wo mittels eines Kippmechanismus die Ladeschaufel verschwenkt und die Sandladung ausgeschüttet werden kann.

US-A-2 816 772 offenbart ein Kindertretfahrzeug mit einem Schneeräumschild gemäß dem Oberbegriff von Anspruch 1. Aus US-A-2 776 767 ist ferner ein Kindertretfahrzeug bekannt, das ein vertikal beweglich gehaltenes Schneeräumschild hat.

Der vorliegenden Erfindung liegt die Aufgabe zugrunde, ein Kindertretfahrzeug anzugeben, dessen Spielwert dadurch erhöht ist, daß es für neue Verwendungszwecke einsetzbar ist.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, daß das Kindertretfahrzeug mittels einer Adaptereinrichtung mit einem Schneeräumschild verbunden ist. Die Adaptereinrichtung ist dabei mit dem Kindertretfahrzeug lösbar verbunden, so daß das Schneeräumschild bei Bedarf leicht an dem Kindertretfahrzeug anbringbar und wieder abnehmbar ist.

Durch die Anbringung eines Schneeräumschildes ist der Spielwert des Kindertretfahrzeugs erheblich erhöht, da das Kind hiermit die Möglichkeit erhält, auf spielerische Weise eine interessante Aufgabe zu erfüllen. Während das Fahren im Schnee mit einem herkömmlichen Kindertretfahrzeug im allgemeinen als unjnteressant empfunden werden dürfte, bietet das Fahren mit einem Schneeräumtretfahrzeug eine interessante spielerische Tätigkeit. Beispielsweise kann das Kind mit dem erfindungsgemäßen Tretfahrzeug ohne weiteres dazu beitragen, den Gehweg vor der Haustür oder eine Garagenzufahrt von Schnee zu räumen.

Der Begriff "Schneeräumschild" bezeichnet hier die bevorzugte Verwendung zum Räumen von Schnee, wobei natürlich nicht ausgeschlossen werden soll, daß mit dem Räumschild auch andere im Wege liegenden Materialien zur Seite geräumt werden können.

Weiter ist erfindungsgemäß vorgesehen, daß das Schneeräumschild in verschiedenen Winkelstellungen zur Längsrichtung des Kindertretfahrzeugs an der Adaptereinrichtung fixierbar ist. Bevorzugt sind hier drei Stellungen, nämlich eine mittige, senkrecht zur Längsachse des Kindertretfahrzeugs verlaufende Position sowie eine Schrägstellung nach links und nach rechts. Die Einstellbarkeit der Winkelstellung ermöglicht das Beiseiteräumen des Schnees in verschiedene Richtungen und macht das Tretfahrzeug für Kinder noch interessanter.

Außerdem ist erfindungsgemäß vorgesehen, daß das Schneeräumschild vertikal bewegbar gehalten ist. Hiermit wird verhindert, daß das Schneeräumschild beim Vorwärtsfahren des Kindertretfahrzeugs durch Unebenheiten am Boden, beispielsweise überstehende Steine oder Eis so blockiert ist, daß das Fahrzeug nicht weiterfahren kann. Durch das mögliche Anheben des Schneeräumschildes wird solchen Hindernissen die Wirkung genommen.

In einer Ausführungsform der Erfindung befindet sich bevorzugt vorne an dem Kindertretfahrzeug eine Kupplungseinrichtung, die beispielsweise aus zwei im Abstand übereinander angeordneten, im wesentlichen plattenförmigen Kupplungsteilen bestehen kann, zwischen die ein Adapter mit einem ebenfalls insgesamt plattenförmigen Abschnitt so eingreift, daß dieser Abschnitt des Adapters ohne vertikales Spiel aufgenommen ist. Durch die beiden Kupplungsteile und den dazwischen angeordneten Abschnitt des Adapters führen miteinander fluchtende Durchgangsbohrungen, durch die ein Kupplungsbolzen gesteckt werden kann, so daß der Adapter an dem Kindertretfahrzeug befestigt ist. Hierbei liegt er mit seiner dem Kindertretfahrzeug zugewandten Stirnseite an der Vorderfront des Kindertretfahrzeugs an, so daß er völlig unbeweglich fixiert ist. Der oben verwendete Begriff "plattenförmig" ist nicht so zu verstehen, daß es sich hierbei um massive Platten handeln muß, sondern die im Kunststoffspritzgußverfahren hergestellten Bauteile sind bevorzugt aus vielen Wand- und Strebenabschnitten mit dazwischenliegenden Hohlräumen einstückig geformt.

Weiter ist bei dieser Ausführungsform vorgesehen, daß der Adapter zwei seitlich voneinander beabstandete Führungseinrichtungen für einen bevorzugt aus Metall bestehenden Bügel aufweist, der mit einem Kupplungselement für einen an dem Schneeräumschild befestigten Schildadapter verbunden ist, wobei der Bügel in der Führungseinrichtung über einen vorgegebenen Bereich vertikal anhebbar und in einer angehobenen Lage so verschwenkbar ist, daß der Bügel in dieser Lage fixiert ist. Der Bügel hat in einer Vorderansicht zweckmäßigerweise eine umgekehrte U-Form, wobei das Kupplungselement auf die in der Einbaulage unteren freien Enden des Bügels aufgesteckt ist.

Hierbei ist weiter vorgesehen, daß die beiden parallelen Holme des Bügels einen geradlinigen oberen Abschnitt und einen abgewinkelten unteren Abschnitt aufweisen, und daß die Holme oberhalb und unterhalb der Knickstelle jeweils einen nach innen vorstehenden Zapfen aufweisen, die in die Führungseinrichtung eingreifen. Die Führungseinrichtungen sind Schienen, die außen an zwei voneinander seitlich beabstandeten, aufrechten Abschnitten des Adapters angeformt sind oder seitliche Nuten in diesen Abschnitten.

Weiter ist vorgesehen, daß die Führungsschienen oder Nuten jeweils eine lange, im wesentlichen vertikale Führungsbahn aufweisen, die am oberen Ende bogenförmig in eine kurze, im wesentlichen vertikal nach unten weisende Führungsbahn übergeht.

Bei dieser Ausgestaltung wird der Metallbügel, an dessen Kupplungselement das Schneeräumschild befestigt ist, mit den jeweils zwei Zapfen der beiden parallelen Holme in der Arbeitsposition des Schneeräumschild in beiden vertikalen Schienen oder Nuten geführt, wobei in dieser Lage die oberen Abschnitte die beiden parallelen Holme nach vorne geneigt sind und die unteren, nach vorne abgewinkelte Abschnitte der Holme auf den entsprechend abgewinkelten Oberseiten von zwei seitlichen Ansätzen des Adapters aufliegen. Die Endabschnitte der unteren Holmabschnitte sind noch einmal nach oben abgewinkelt, so daß sie in der Arbeitsstellung des Schneeräumschildes zusammen mit dem auf diese Enden aufgeschobenen Kupplungselement horizontal ausgerichtet sind.

Das Schneeräumschild ist demnach dadurch vertikal bewegbar, daß die Zapfen des Bügels in den vertikalen Schienen oder Nuten nach oben bewegbar sind, bis diese Schienen oder Nuten nach einer vorgegebenen Strecke bogenförmig in ein nach unten gerichtetes Sackloch übergehen. Wenn das Kind das Schneeräumschild in eine angehobene Ruheposition versetzen will, ergreift es den horizontal verlaufenden oberen Querholm des Bügels und hebt an diesem Handgriff den Bügel mit dem Schneeräumschild zunächst bis zum oberen bogenförmigen Übergang der Führungsschiene an und verschwenkt den Bügel so nach hinten, daß die oberen Zapfen in die beiden Sacklöcher eintreten. In dieser Position ist das Schneeräumschild selbsttätig blockiert.

Das Kupplungselement, das an den beiden horizontalen Enden der parallelen Holme des Bügels mittels entsprechend geformter seitlicher Ansätze angebracht ist, enthält zwei in Längsrichtung des Fahrzeugs beabstandete Bohrung, während der an der Rückseite des Schneeräumschildes angebrachte, beispielsweise angeschraubte Schildadapter eine zu dem Schneeräumschild hin liegende Bohrung und zu dem Kupplungselement hin liegend bevorzugt drei weitere Bohrungen aufweist, die auf einem Kreisbogen liegen, dessen Radius mit dem Abstand der zwei Bohrungen des Kupplungselements übereinstimmt. Der Schildadapter enthält dabei bevorzugt im Abstand parallel übereinander liegende Abschnitte, zwischen die das Kupplungselement ohne vertikales Spiel eingreift. Dabei fluchtet in der Befestigungslage das dem Schneeräumschild zugewandte Loch des Kupplungselementes mit den darüber und darunter angeordneten Löchern des Schildadapters. Durch diese drei Löcher wird ein Kupplungsbolzen gesteckt, der die Drehachse für drei mögliche Winkelpositionen des Schneeräumschildes bildet. Diese drei Winkelpositionen sind dadurch einstellbar, das jeweils ein ausgewähltes Loch des Schildadapters auf das zweite Loch des Kupplungselements ausgerichtet wird. Die ausgewählte Winkelposition wird durch einen weiteren Kupplungsbolzen fixiert.

Das Schneeräumschild ist an seiner Unterkante zweckmäßigerweise mit einer Metallleiste versehen, um eine Abnutzung des zweckmäßigerweise aus Kunststoff bestehenden Schneeräumschildes zu vermeiden bzw. zu verringern. Erfindungsgemäß ist ferner vorgesehen, daß zumindest die Hinterräder des Kindertretfahrzeugs mit Schneeketten versehen sind.

In einer alternativen Ausführungsform der Erfindung ist das Schneeräumschild an einem Kindertretfahrzeug angebracht, das zwei seitlich beabstandete, anhebbare Arme aufweist, an denen als Zubehör auch eine Ladeschaufel anbringbar sein kann.

Die Erfindung sieht vor, daß ein mit einem Kupplungselement versehener Adapter an den beiden Armen anbringbar ist, der über das Kupplungselement und den oben beschriebenen Schildadapter mit dem Schneeräumschild zu versehen ist. Das Anheben des Schneeräumschildes erfolgt bei dieser Ausführungsform durch Verschwenken der beiden Arme des Kindertretfahrzeugs.

Weitere Einzelheiten der Erfindung ergeben sich aus der nachfolgenden Beschreibung zweier Ausführungsformen der Erfindung sowie anhand der Zeichnungen. Dabei zeigen:
- Figur 1: eine Ausführungsform einer Anordnung aus einer Adaptereinrichtung und einem Schneeräumschild in einer skizzenhaften auseinandergezogenen Darstellung;

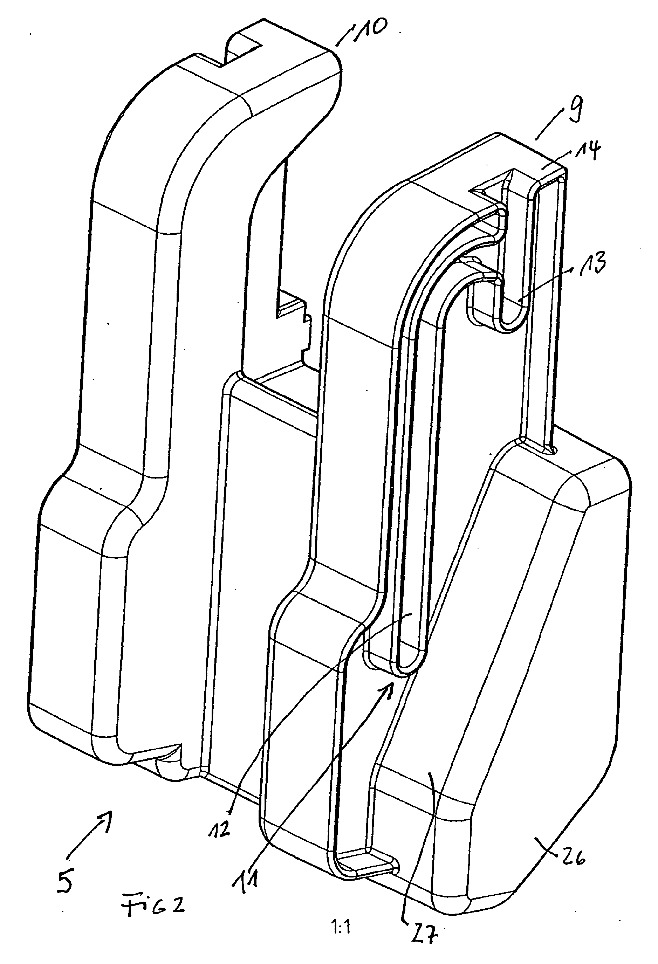

- Figur 2: den Adapter gemäß Figur 1 in vergrößerter Darstellung;
- Figuren 3a bis 3c: eine Stirnansicht, Seitenansicht und eine Aufsicht des Bügels der Ausführungsform gemäß Figur 1;

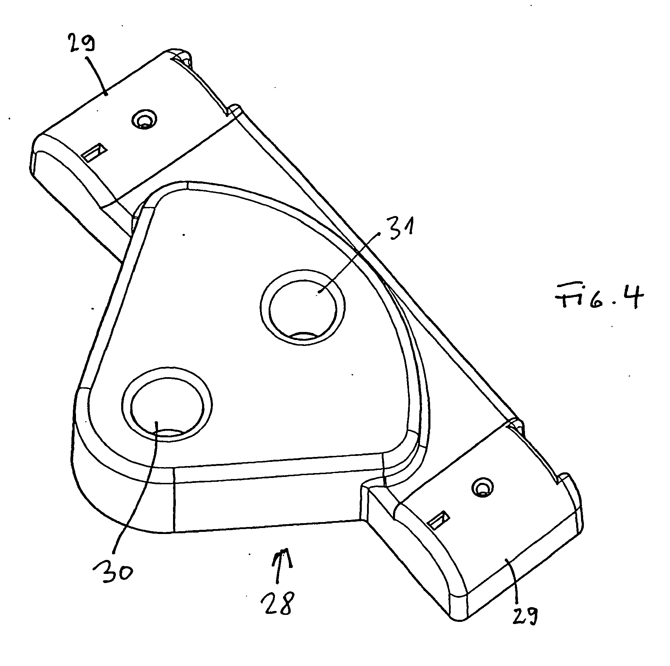

- Figur 4: das Kupplungselement der Ausführungsform der Figur 1;

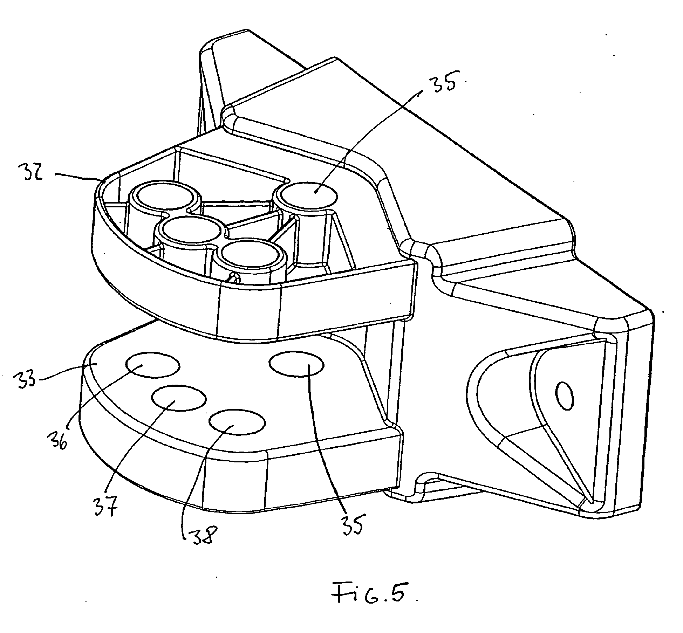

- Figur 5: den Schildadapter der gemäß Figur 1;
- Figur 6: eine zweite Ausführungsform einer Anordnung aus einem Adapter und einem Schneeräumschild für ein Kindertretfahrzeug mit heb- und senkbaren Armen in einer skizzenhaften auseinandergezogenen Darstellung;

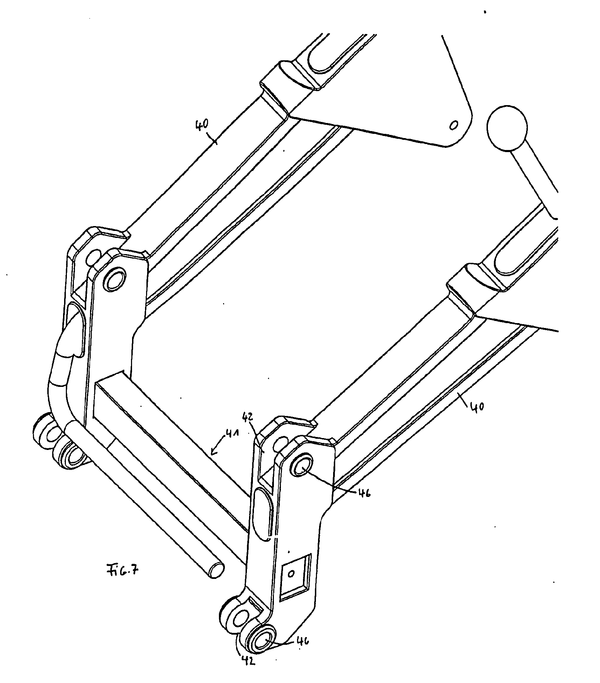

- Figur 7: eine perspektivische Ansicht der beiden Arme gemäß Figur 6;

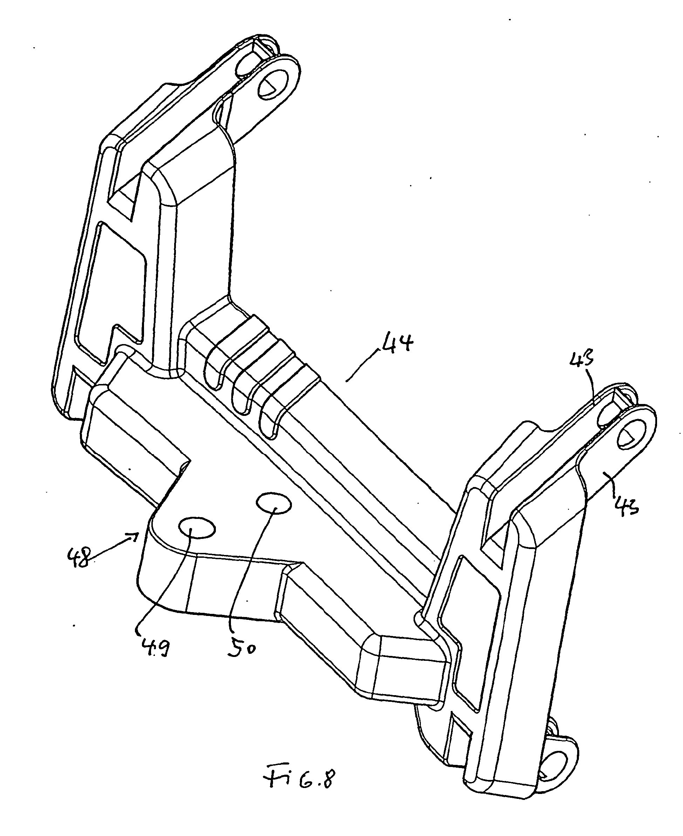

- Figur 8: eine perspektivische Ansicht des Adapters gemäß Figur 6, und

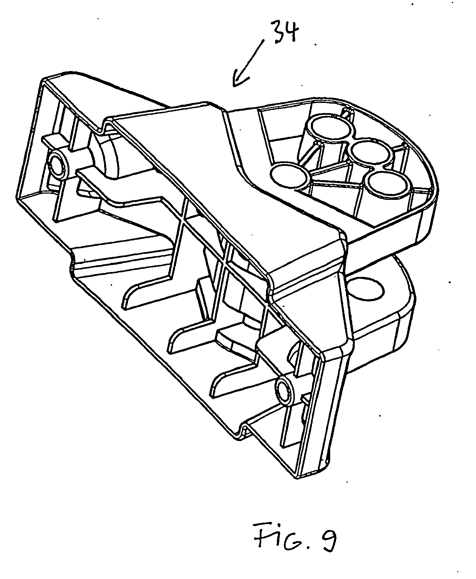

- Figur 9: den Schildadapter.

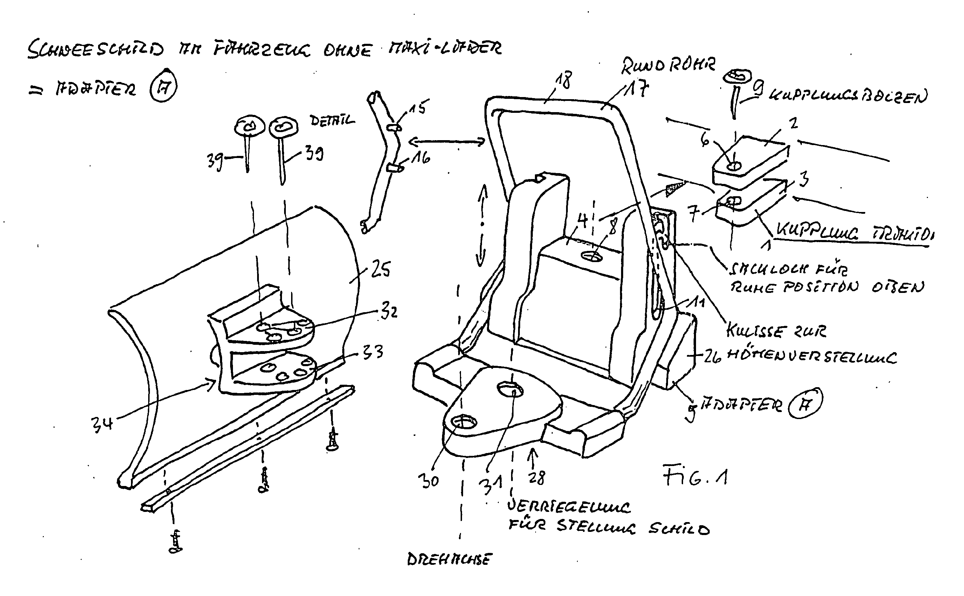

In Figur 1 ist rein schematisch eine Kupplung 1 eines Kindertretfahrzeugs dargestellt, das beispielsweise die Form eines Traktors hat. Die bevorzugt an der Front des Tretfahrzeugs angebrachte Kupplung (die aber auch am Heck vorgesehen sein kann) enthält zwei in Abstand übereinander angeordnete Kupplungsteile 2,3, die einen solchen Abstand voneinander haben, daß ein querverlaufender Wandabschnitt 4 eines insgesamt mit dem Bezugszeichen 5 bezeichneten, aus Kunststoff bestehenden Adapters 5 im wesentlichen ohne vertikales Spiel zwischen die Kupplungsteile 2,3 paßt. Wenn der Adapter 5 an der Front des nicht dargestellten Kindertretfahrzeugs anliegt, fluchten Durchgangsbohrungen 6,7 der Kupplung 1 mit einer Durchgangsbohrung 8 durch den Wandabschnitt 4, so daß ein Kupplungsbolzen 9 durch die drei Löcher gesteckt werden kann, um den Adapter 5 unbeweglich an dem Kindertretfahrzeug zu befestigen.

Der Adapter 5 hat zwei seitlich voneinander beabstandete, nach oben ragende Arme 9,10, an deren Außenseiten Führungsschienen 1 angeformt sind. Die Führungsschienen 11, die an den beiden Armen 9, 10 identisch ausgebildet sind, haben einen langen vertikalen Abschnitt 12, der am oberen Ende bogenförmig in ein kurzes, nach unten verlaufendes Sackloch 13 übergehen. Das Sackloch 13 geht bis zur Oberseite 14 durch, um das Einsetzen von Führungszapfen 15, 16 eines Metallbügels 17 zu ermöglichen.

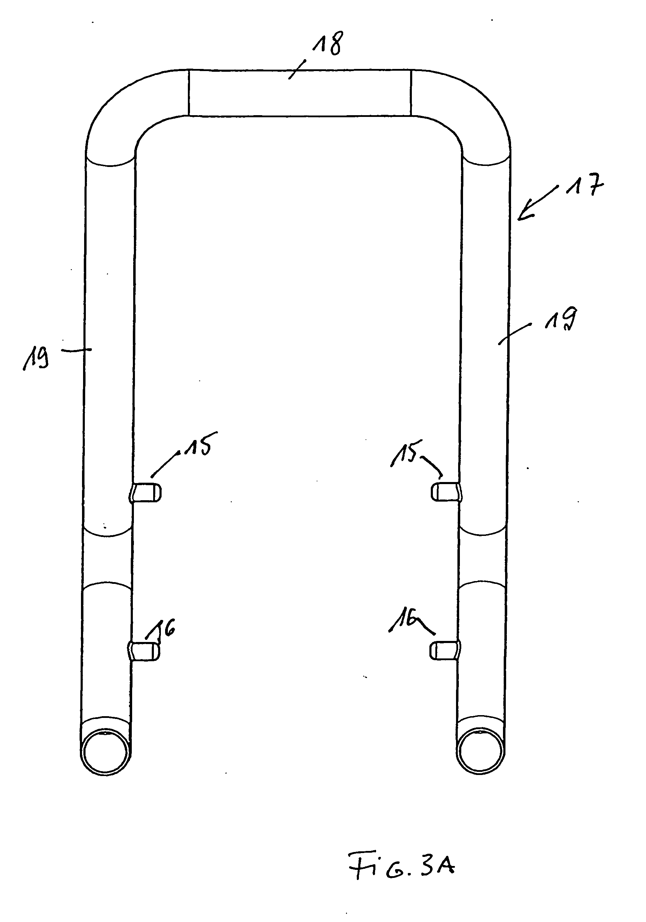

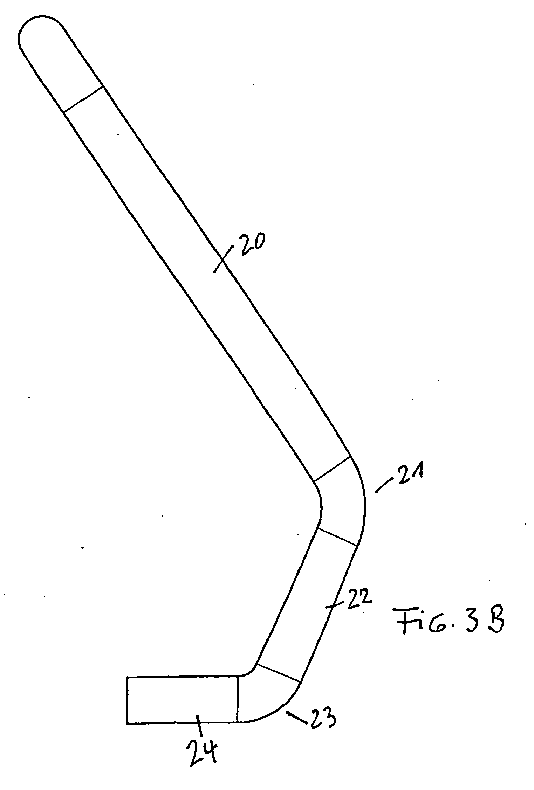

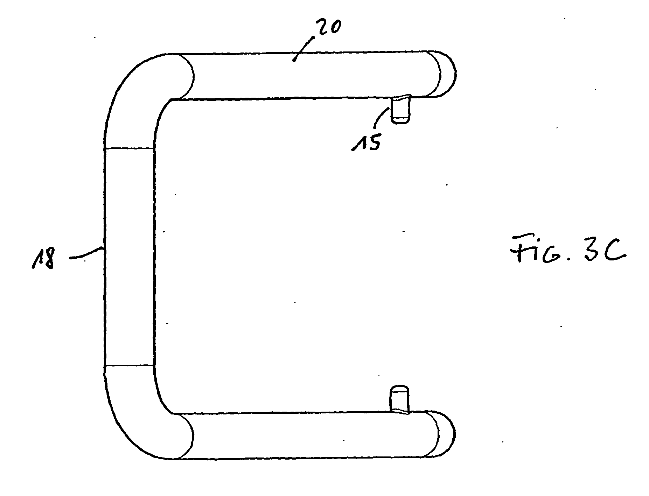

Der Bügel 17 hat in einer Stirnansicht (Figur 3A) eine umgekehrte U-Form mit einem in der Einbaulage oberen Querholm 18 und zwei parallelen Seitenholmen 19. Die Seitenholme 19 haben in der Seitenansicht (Figur 3B) in der Einbaulage einen schräg nach vorne verlaufenden Abschnitt 20, der an einer Knickstelle 21 in einen wiederum schräg nach vorne abgewinkelten Abschnitt 22 übergeht, der an einer weiteren Knickstelle 23 in einen in der Einbaulage horizontalen Endabschnitt 24 übergeht. Der Bügel 17 greift mit jeweils einem Zapfen 15 des Abschnitts 20 und einem Zapfen 16 des Abschnitts 22 in der abgesenkten Arbeitsstellung des Schneeräumschildes 25 in den langen vertikalen Abschnitt 12 der Führungsschiene bzw. Führungsnut ein. Um das Schneeräumschild 25 in einer angehobenen Position zu fixieren, wird der Bügel 17 so angehoben und nach hinten verschwenkt, daß die beiden Zapfen 15 in die zugehörigen Sacklocher 13 eintreten. Aus dieser Position können sie nur durch erneutes Anheben und Verschwenken des Bügels 17 freigegeben werden.

Der Adapter 5 hat zwei seitliche Ansätze 26 mit einer Auflagefläche 27 für den zugeordneten Abschnitt 22 des Bügels 17, deren Neigung übereinstimmt.

Auf die beiden Endabschnitte 24 des Bügels 17 ist ein Kupplungselement 28 aufgesteckt, indem die beiden Enden 24 in rohrförmige Aussparungen seitlicher Ansätze 29 des Kupplungselementes 28 eingesteckt und darin beispielsweise verschraubt sind. Das Kupplungselement 28 hat ein als Drehachse bei der Winkeleinstellung des Schneeräumschildes 25 dienendes Loch 30 und ein in Längsrichtung des Kindertretfahrzeugs hiervon beabstandetes zweites Loch 31. Die Höhe des Kupplungsstücks 28 stimmt im wesentlichen mit dem lichten Abstand zweier Vorsprünge 32 und 33 eines Schildadapters 34 überein. Der Schildadapter 34 ist an der Rückseite des Schneeräumschildes 25 befestigt, vorzugsweise angeschraubt.

Durch die Vorsprünge 32 und 33 führen miteinander fluchtende Löcher, und zwar ein zur Seite des Schneeräumschildes 25 hin liegende Loch 35, das in der Einbaulage mit dem Loch 30 des Kupplungselements' 28 fluchtet, sowie drei auf einem Kreisbogen um das Loch 35 liegende Löcher 36, 37 und 38 von denen jeweils zur Einstellung der Winkellage des Schneeräumschildes ein ausgesuchtes Loch mit dem Loch 31 des Kupplungselements 28 fluchtet. Durch die Löcher 35 und 30 sowie 31 und 36 bzw. 37 bzw. 38 werden zwei Kupplungsbolzen 39 gesteckt.

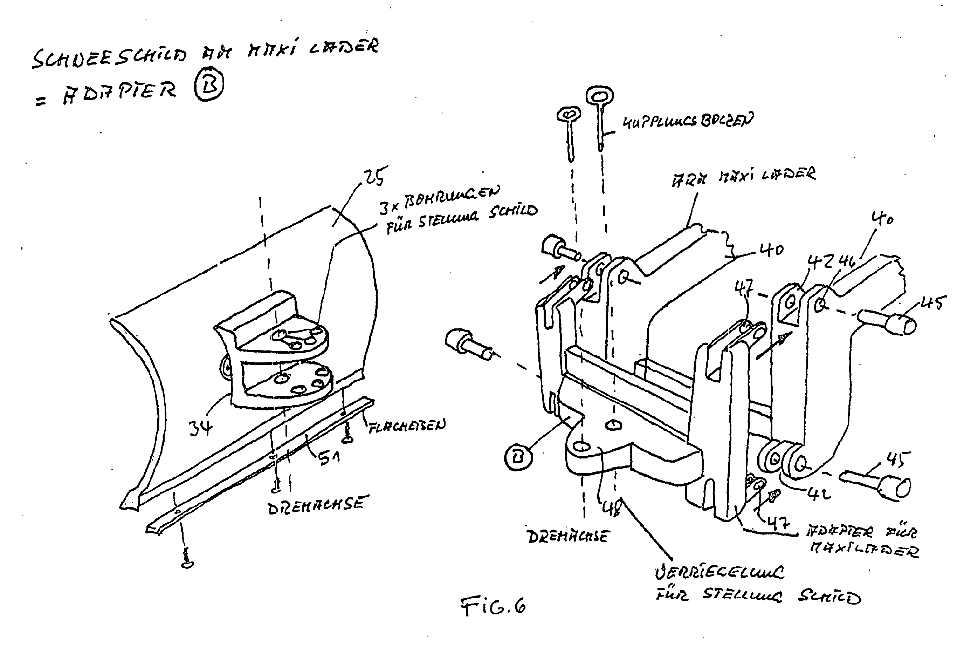

Figur 6 zeigt weitgehend schematisch den vorderen Endabschnitt von zwei an einem nicht dargestellten Kindertretfahrzeug befestigten Armen 40, die mittels eines nicht dargestellten Mechanismus anhebbar und absenkbar sind. Die beiden Arme 40 sind mittels eines Formteils 41 miteinander verbunden, das Aussparungen 42 enthält, in die vorstehende Stege 43 eines Adapter 44 einsetzt bar sind. Schraubenbolzen 45 werden durch miteinander fluchtende Löcher 46 und 47 in den die Aussparungen 42 begrenzenden Wänden bzw. den Stegen 43 geführt, womit der Adapter 44 fest an den beiden Armen 40 des Kindertretfahrzeugs angebracht ist.

Die Befestigung des Schneeräumschildes 25 erfolgt über ein Kupplungselement 48, das einstückig an dem Adapter 44 angeformt ist und - ebenso wie das Kupplungselement 28 - mit zwei Löchern 49, 50 zur Kopplung mit dem oben beschriebenen Schildadapter 34 in der ausgewählten Winkellage versehen ist.

Unter dem Schneeräumschild 25 ist ein Flacheisen 51 angeschraubt.

## Patentansprüche

1. Kindertretfahrzeug mit einem Schneeräumschild (25), das über eine Adaptereinrichtung (5,44) mit dem Kindertretfahrzeug verbindbar ist und das in verschiedenen Winkelstellungen zur Längsrichtung des Kindertretfahrzeugs fixierbar ist,
**dadurch gekennzeichnet,**
**dass** das Schneeräumschild (25) vertikal bewegbar gehalten ist.

2. Kindertretfahrzeug nach Anspruch 1, wobei das Kindertretfahrzeug mit einer Kupplungseinrichtung versehen ist,
**dadurch gekennzeichnet,**
**daß** ein Adapter (5) an der Kupplungseinrichtung (1) befestigbar ist, der zwei seitlich voneinander beabstandete Führungseinrichtungen (11) für einen Bügel (17) aufweist, der mit einem Kupplungselement (28) für einen an dem Schneeräumschild (25) befestigten Schildadapter (34) verbunden ist, wobei der Bügel (17) in der Führungseinrichtung (11) über einen vorgegebenen Bereich vertikal anhebbar und in einer angehobenen Lage so verschwenkbar ist, daß der Bügel (17) in dieser Lage fixiert ist.

3. Kindertretfahrzeug nach Anspruch 2,
**dadurch gekennzeichnet,**
**daß** der Bügel (17) in einer Vorderansicht eine umgekehrte U-Form hat und daß das Kupplungselement (28) auf die freien Enden (24) des Bügels (17) aufgesteckt ist.

4. Kindertretfahrzeug nach Anspruch 2 oder 3,
**dadurch gekennzeichnet,**
**daß** die beiden parallelen Holme (19) des Bügels (17) einen geradlinigen oberen Abschnitt (20) und einen davon abgewinkelten unteren Abschnitt (22) aufweisen, und daß die Holme (19) oberhalb und unterhalb der Knickstelle (21) jeweils einen nach innen vorstehenden Zapfen (15, 16) aufweisen, die in die Führungseinrichtung (11) eingreifen.

5. Kindertretfahrzeug nach einem der Ansprüche 2 bis 4,
**dadurch gekennzeichnet,**
**daß** die Führungseinrichtungen (11) jeweils eine lange vertikale Führungsbahn (12) aufweisen, die am oberen Ende bogenförmig in eine kurze, im wesentlichen vertikal nach unten verlaufende Führungsbahn (13) übergeht.

6. Kindertretfahrzeug nach einem der Ansprüche 2 bis 5,
**dadurch gekennzeichnet,**
**daß** das Kupplungselement (28) zwei in Längsrichtung des Tretfahrzeugs beabstandete Bohrungen (30,31) aufweist, und daß der Schildadapter (34) eine zur Seite des Schneeräumschildes (25) liegende Bohrung (35) und bevorzugt drei weitere Bohrungen (36, 37, 38) enthält, die auf einem Kreisbogen liegen, dessen Radius mit dem Abstand der zwei Bohrungen (30,31) des Kupplungselementes (28) übereinstimmt.

7. Kindertretfahrzeug nach einem der Ansprüche 2 bis 6,
**dadurch gekennzeichnet,**
**daß** der Schildadapter (34) zwei übereinanderliegende Abschnitte (32,33) aufweist, zwischen die das Kupplungselement (28) im wesentlichen ohne vertikales Spiel paßt.

8. Kindertretfahrzeug nach Anspruch 1, wobei das Kindertretfahrzeug zwei seitlich beabstandete, anhebbare und absenkbare Arme aufweist,
**dadurch gekennzeichnet,**
**daß** ein mit einem Kupplungselement (48) versehener Adapter (44) an den beiden Armen anbringbar ist und
**daß** das Kupplungselement (48) mit einem an dem Schneeräumschild (25) befestigten Schildadapter (34) koppelbar ist.

## Claims

1. Child's pedal car with a snowplow blade (25) that can be connected to a child's pedal car using an adapter device (5, 44) and that can be fixed in different angular positions with respect to the longitudinal direction of the child's pedal car,
**characterised in that**,
the snow plow blade (25) is held so as to move vertically.

2. A child's pedal car according to Claim 1, whereby the child's pedal char is provided with a coupling device
**characterised in that**,
an adapter (5) can be attached to the coupling device (1), which has two guide devices (11), at a laterally distance from each other, for a bracket (17), which is connected to a coupling element (28) for a blade adapter (34) attached to the snowplow blade (25), whereby the bracket (17) can be raised vertically over a predetermined range in the guide device (11), and can be pivoted in the raised position in such a way that the bracket (17) is fixed in this position.

3. A child's pedal car according to Claim 2,
**characterised in that**
the bracket (17) has an inverted U-shape in a front view and that the coupling element (28) is placed on the free ends (24) of the bracket (17).

4. A child's pedal car according to Claim 2 or 3,
**characterised in that**
that the two parallel bars (19) of the bracket (17) have a straight upper section (20) and an angled lower section (22), and that the bars (19) have an inward projecting peg (15, 16) above and below the bend (21), respectively, which mesh with the guide device (11).

5. A child's pedal car according to one of Claims 2 through 4,
**characterised in that**
the guide devices (11), in each case, have a long vertical guide path (12), that transitions at the upper end in an arc shape into a short, essentially vertical downward-running guide path (13).

6. A child's pedal car according to one of Claims 2 through 5,
**characterised in that**
the coupling element (28) has two holes (30, 31) at a distance from each other in the longitudinal direction of the pedal car and that the blade adapter (34) includes one hole lying toward the side of the snowplow blade (25), and preferably three additional holes (36, 37, 38) that lie in a circular arc, whose radius matches the distance of the two holes (30, 31) of the coupling element (28).

7. A child's pedal car according to one of Claims 2 through 6,
**characterised in that**
the blade adapter (34) has two sections (32, 33) lying one above the other, between which the coupling element (28) fits essentially without vertical play.

8. A child's pedal car according to Claim 1, whereby the child's pedal car has two arms at a lateral distanced from each other that can be raised and lowered,
**characterised in that**
an adapter (44) provided with a coupling element (48) can be mounted on the two arms and that the coupling element (48) can be coupled with a blade adapter (34) attached to the snowplow blade (25).

## Revendications

1. Véhicule à pédales pour enfant, comportant une lame de déneigement (25), qui est apte à être assemblée au véhicule à pédales par l'intermédiaire d'un dispositif d'adaptation (5, 44) et qui peut être immobilisée dans différentes positions angulaires par rapport au sens longitudinal du véhicule à pédales, **caractérisé en ce que** la lame de déneigement (25) peut être maintenue mobile dans le sens vertical.

2. Véhicule à pédales pour enfant selon la revendication 1, le véhicule à pédales étant muni d'un dispositif d'accouplement, **caractérisé en ce qu'**un adaptateur (5) peut être fixé contre le dispositif d'accouplement (1), qui comporte deux dispositifs de guidage (11), écartés latéralement l'un de l'autre et destinés à un arceau (17) qui est assemblé à un élément d'accouplement (28) pour un adaptateur (34) fixé contre la lame de déneigement (25), l'arceau (17) étant apte à être relevé verticalement sur une zone déterminée dans le dispositif de guidage (11) et étant apte à pivoter vers une position haute de telle sorte que l'arceau (17) est immobilisé dans cette position.

3. Véhicule à pédales pour enfant selon la revendication 2, **caractérisé en ce que** l'arceau (17), sur une vue de face, a la forme d'un U renversé et **en ce que** l'élément d'accouplement (28) est enfiché sur les extrémités libres (24) de l'arceau (17).

4. Véhicule à pédales pour enfant selon la revendication 2 ou 3, **caractérisé en ce que** les deux barres longitudinales (19) parallèles de l'arceau (17) comportent une partie supérieure (20) droite et une partie inférieure (22) coudée à partir de celle-ci, et **en ce que** les barres longitudinales (19) comportent chacune, au-dessus et au-dessous de la zone coudée (21), respectivement un téton (15, 16) en saillie vers l'intérieur, lesquels s'engagent dans le dispositif de guidage (11).

5. Véhicule à pédales pour enfant selon l'une quelconque des revendications 2 à 4, **caractérisé en ce que** les dispositifs de guidage (11) comportent chacun une longue voie de guidage (12) verticale qui, au niveau de l'extrémité supérieure, est prolongée par une courbe qui débouche dans une courte voie de guidage (13) sensiblement verticale orientée vers le bas.

6. Véhicule à pédales pour enfant selon l'une quelconque des revendications 2 à 5, **caractérisé en ce que** l'élément d'accouplement (28) comporte deux forures (30, 31) écartées l'une de l'autre dans le sens longitudinal du véhicule à pédales, et **en ce que** l'adaptateur (34) de la lame de déneigement comporte une forure (35) située sur le côté de la lame de déneigement (25) et, de préférence, trois autres forures (36, 37, 38) qui sont situées sur un arc de cercle, dont le rayon coïncide avec la distance entre les deux forures (30, 31) de l'élément d'accouplement (28).

7. Véhicule à pédales pour enfant selon l'une quelconque des revendications 2 à 6, **caractérisé en ce que** l'adaptateur (34) de la lame de déneigement comporte deux parties (32, 33) superposées, entre lesquelles l'élément d'accouplement (28) est monté sensiblement sans jeu vertical.

8. Véhicule à pédales pour enfant selon la revendication 1, le véhicule à pédales comportant deux bras relevables et abaissables, écartés latéralement l'un de l'autre, **caractérisé en ce qu'**un adaptateur (44), muni d'un élément d'accouplement (48), est apte à être monté contre les deux bras, et **en ce que** l'élément d'accouplement (48) est apte à être couplé à un adaptateur (34) fixé contre la lame de déneigement (25) .
